# EUROPÄISCHE PATENTSCHRIFT

(11) **EP 2 162 335 B1**
(45) Veröffentlichungstag und Bekanntmachung des Hinweises auf die Patenterteilung: **19.12.2012**
(21) Anmeldenummer: 08773570.0
(22) Anmeldetag: 21.06.2008
(51) Int. Cl.: B60W 30/14, B60K 31/00, B60K 31/02

(54) **VERFAHREN ZUM REAKTIVIEREN EINER UNTERBROCHENEN GESCHWINDIGKEITSREGELUNG**
METHOD FOR REACTIVATING AN INTERRUPTED CRUISE CONTROLLING PROCESS
PROCÉDÉ POUR RÉACTIVER UNE RÉGULATION DE VITESSE INTERROMPUE

(30) Priorität: 06.07.2007 DE 102007031545
(43) Veröffentlichungstag der Anmeldung: 17.03.2010
(73) Patentinhaber: Bayerische Motoren Werke Aktiengesellschaft, 80809 München (DE)
(72) Erfinder: HUANG, Pei-Shih Dennis, 85293 Reichertshausen (DE)
(86) Internationale Anmeldenummer: PCT/EP2008/005023
(87) Internationale Veröffentlichungsnummer: WO 2009/006996

(56) Entgegenhaltungen:
- EP-A- 0 355 967
- EP-A- 0 729 859
- EP-A- 1 233 391
- EP-A2- 1 442 917
- FR-A- 2 780 350
- FR-A- 2 838 386
- FR-A- 2 853 596

## Beschreibung

Die Erfindung bezieht sich auf ein Verfahren zum Reaktivieren einer unterbrochenen Geschwindigkeitsregelung eines sich nicht im Stillstand befindlichen Fahrzeugs nach dem Oberbegriff des Anspruchs 1.

Kraftfahrzeuge mit Geschwindigkeitsregelsystemen sind seit langem bekannt. Die meisten derzeit erhältlichen Geschwindigkeitsregelsysteme regeln die Geschwindigkeit des Kraftfahrzeugs auf eine vorgegebene Sollgeschwindigkeit. Neben diesen Fahrgeschwindigkeitsregelsystemen können heute bereits bei einigen Herstellern auch um eine Abstandsregelung erweiterte Geschwindigkeitsregelsysteme erworben werden. Vom Prinzip her ist dabei die allgemein bekannte Geschwindigkeitsregelung, die eine bestimmte vorgegebene Sollgeschwindigkeit einhält, um eine zusätzliche Abstandsregelfunktion erweitert, so dass der Einsatz einer solchen abstandsbezogenen Geschwindigkeitsreglung auch im dichten Autobahn- und Landstrassenverkehr möglich wird. Diese sog. "abstandsbezogene Geschwindigkeitsregelung" hält die vorgegebene Wunschgeschwindigkeit, wenn die eigene Fahrspur frei ist. Erkennt eine am Kraftfahrzeug angebrachte Abstandsensorik, die insbesondere auf Radarbasis arbeiten kann, ein vorausfahrendes Zielobjekt bzw. (Kraft-)Fahrzeug in der eigenen Spur, so wird die eigene Geschwindigkeit, bspw. durch Veranlassen eines geeigneten Bremsmoments, an die Geschwindigkeit des vorausfahrenden Kraftfahrzeugs angepasst. Teilweise können solche Systeme bei einer Folgefahrt bis in den Stillstand regeln.

Prinzipiell können Geschwindigkeitsregelsysteme mittels eines Bedienelements, welches beispielsweise an Lenkrad oder am Armaturbrett angeordnet ist, oder mittels eines Bedienhebels, der bspw. in der Nähe des Lenkrads angeordneten ist, ein- und ausgeschaltet werden. Weiter kann die Geschwindigkeitsregelung aufgrund bestimmter Fahr- oder Fahrermanöver unterbrochen werden, so dass das Geschwindigkeitsregelsystem prinzipiell noch eingeschaltet ist, die Geschwindigkeitsregelung aber derzeit nicht ausgeführt wird. Eine Unterbrechung der Geschwindigkeitsregelung durch Schalten in einen sog. Standby-Modus erfolgt bspw. dann, wenn der Fahrer das Bremspedal oder die Handbremse betätigt, oder aufgrund eines automatischen Fahr-Stabilisierungseingriffs. Das Geschwindigkeitsregelsystem ist dann zwar noch eingeschaltet, die Regelung aber nicht aktiv.

Um die unterbrochene Geschwindigkeitsregelung wieder zu reaktivieren, muss der Fahrer ein entsprechendes Bedienelement, welches in der Regel am Lenkrad oder in der Nähe des Lenkrads angeordnet ist, bestätigen. Die Geschwindigkeitsregelung regelt dann wieder auf die bereits vorher gespeicherte Sollgeschwindigkeit.

Ein derartiges Geschwindigkeitsregelsystem ist bspw. in den aktuellen 5er BMW-Fahrzeugen im Einsatz. Ist das Fahrzeug mit einem sog. aktiven Geschwindigkeitsregelsystem ausgestattet, welches eine Regelung der Fahrzeuggeschwindigkeit bei einem vorausfahrenden Fahrzeug bis in den Stillstand ermöglicht, kann unter bestimmten Voraussetzungen eine Betätigung des Gaspedals im Stillstand notwendig sein, damit das Fahrzeug die Geschwindigkeitsregelung aus dem Stillstand wieder aufnimmt.

Aus der EP 1 442 917 A2 ist ein abstandsgeregeltes Geschwindigkeitsregelsystem bekannt, das ebenfalls eine Regelung der Geschwindigkeit bis in den Stillstand ermöglicht. Eine Reaktivierung des Geschwindigkeitsregelsystems eines automatisch bis in den Stillstand abgebremsten Fahrzeugs ist möglich, indem der Fahrer das Gaspedal kurzzeitig betätigt und dann wieder löst.

Aus der FR 2 780 350 ist bereits ein Kraftfahrzeug mit einer Geschwindigkeitsregelvorrichtung bekannt, die nur aktiv ist, solange der Fahrer das Gaspedal in einen vorgegebenen Zwischenbereich hält. Eine Reaktivierung aus dem Standby-Betrieb ist möglich, wenn bei Rückkehr des Gaspedals in den Zwischenbereich das Fahrzeug eine Geschwindigkeit nahe der zuvor festgelegten Sollgeschwindigkeit erreicht, oder wenn ausgehend von einer kleineren Ist-Geschwindigkeit als der vorgegebenen Sollgeschwindigkeit das Motordrehmoment, das notwendig wäre um das Fahrzeug von seiner Ist-Geschwindigkeit auf die Soll-Geschwindigkeit zu beschleunigen, kleiner ist, als das durch Betätigung des Gaspedals aktuell angeforderte Drehmoment. Der nächstliegende Stand der Tecknik ist in der FR 2780 350 zu sehen-Aufgabe der Erfindung ist es nun, einen Verfahren zur Reaktivierung einer unterbrochenen Geschwindigkeitsregelung, also einer eingeschalteten, aber nicht aktiven Regelung eines sich nicht im Stillstand befindlichen Fahrzeugs anzugeben, welches eine einfache und für den Fahrer intuitive Reaktivierung ermöglicht.

Diese Aufgabe wird durch ein Verfahren nach Anspruch 1 gelöst. Vorteilhafte Weiterbildungen ergeben sich aus den abhängigen Ansprüchen.

Grundgedanke der Erfindung ist, dass dem Fahrer ein ständiges Fahren mit einem aktiven Geschwindigkeitsregelsystem ermöglicht werden soll. Benutzt der Fahrer das Geschwindigkeitsregelsystem in der Stadt oder auf einer viel befahren Straßen, wird die Geschwindigkeitsregelung bei herkömmlichen Geschwindigkeitsregelsystemen bei jeder Bremspedalbetätigung unterbrochen. Um die Vorzüge der Geschwindigkeitsregelung wieder nutzen zu können, sollte eine einfache Reaktivierung der Geschwindigkeitsregelung ermöglicht werden.

Das erfindungsgemäße Verfahren zur Reaktivierung einer unterbrochenen Geschwindigkeitsregelung eines sich nicht im Stillstand befindlichen Fahrzeugs zeichnet sich dadurch aus, dass die unterbrochene Geschwindigkeitsregelung durch Betätigung des Gaspedals reaktiviert werden kann. Eine derartige Reaktivierung ist vor allem bei Geschwindigkeitsregelsystemen von Vorteil, die nicht mit einer Abstandsregelfunktion ausgestattet sind, da bei einfachen Geschwindigkeitsregelsystemen bei dichterem Verkehr oft die Sollgeschwindigkeit nicht eingehalten werden kann und die Regelung deshalb unterbrochen werden muss. Eine Reaktivierung durch Betätigung des Gaspedals ist dann für den Fahrer besonders intuitiv, da er sein Fahrzeug wieder beschleunigen möchte und deshalb wie bei herkömmlicher Fahrweise das Gaspedal betätigt.

Vorteilhafterweise wird eine Betätigung des Gaspedals zur Reaktivierung der Geschwindigkeitsregelung bzw. des Geschwindigkeitsregelsystems durch Auswertung verschiedener Gaspedalbetätigungsparameter festgestellt. So wird die Geschwindigkeitsregelung nur dann reaktiviert, wenn bei Betätigung des Gaspedals der Gaspedalweg bzw. Gaspedalwinkel einen vorgegebenen Gaspedalweggrenzwert bzw. Gaspedalwinkelgrenzwert überschreitet und/oder die bei Betätigung des Gaspedals aufgebrachte Kraft auf das Gaspedal einen vorgegebenen Gaspedalkraftgrenzwert überschreitet und/oder der bei Betätigung des Gaspedals aufgebrachte Druck auf das Gaspedal einen vorgegebenen Gaspedaldruckgrenzwert überschreitet. Alternativ oder zusätzlich kann auch die Pedalgeschwindigkeit bei Gaspedalbetätigung ausgewertet werden.

Zusätzlich kann auch noch die Zeitdauer überwacht werden, so dass eine Reaktivierung nur dann stattfindet, wenn der Gaspedalweg für ein vorgegebenes Zeitintervall den vorgegebenen Gaspedalweggrenzwert überschreitet und/oder wenn die bei Betätigung des Gaspedals aufgebrachte Kraft auf das Gaspedal für ein vorgegebenes Zeitintervall den vorgegebenen Gaspedalkraftgrenzwert überschreitet und/oder wenn der bei Betätigung des Gaspedals aufgebrachte Druck auf das Gaspedal für ein vorgegebenes Zeitintervall den vorgegebenen Gaspedaldruckgrenzwert überschreitet. Zur Auswertung der Parameter müssen entsprechende Sensoren bereitgestellt werden.

In einer einfachen Ausgestaltung kann die Gaspedalbetätigung durch einen mit dem Gaspedal verbundenen Schalter detektiert werden, der bei Betätigung des Gaspedals geschaltet wird.

Nach Reaktivierung regelt die Geschwindigkeitsregelung wieder auf eine vorgegebene Sollgeschwindigkeit. Als Sollgeschwindigkeit kann nach Reaktivierung entweder die beim Lösen des Gaspedals aktuelle Geschwindigkeit des Fahrzeugs, oder eine von der aktuellen Geschwindigkeit und der aktuellen Beschleunigung abhängige Geschwindigkeit, oder die vor dem Deaktivieren der Geschwindigkeitsregelung vorgegebene Sollgeschwindigkeit vorgegeben werden. Entweder kann das Geschwindigkeitsregelsystem derart ausgestaltet sein, dass als Sollgeschwindigkeit stets die aktuelle Geschwindigkeit des Fahrzeugs oder die vor dem Deaktivieren der Geschwindigkeitsregelung vorgegebene Sollgeschwindigkeit vorgegeben wird, oder derart, dass die Sollgeschwindigkeit in Abhängigkeit von vorangegangenen Einstellungen oder Fahreraktionen vorgegeben wird.

In einer vorteilhaften Ausgestaltung der Erfindung kann nach Reaktivierung der Geschwindigkeitsregelung durch Gaspedalbetätigung die Sollgeschwindigkeit in Abhängigkeit von der Art der Betätigung des Gaspedals vorgegeben werden. So kann der Fahrer durch die Art der Betätigung des Gaspedals bei jeder Reaktivierung die Sollgeschwindigkeit, auf die geregelt werden soll, frei wählen.

In einer vorteilhaften Ausgestaltung der Erfindung kann nach Reaktivierung der Geschwindigkeitsregelung mittels Gaspedalbetätigung die Sollgeschwindigkeit in Abhängigkeit von der Zeitdauer der Gaspedalbetätigung vorgegeben werden. So wird als Sollgeschwindigkeit die beim Lösen des Gaspedals aktuelle Geschwindigkeit vorgegeben, wenn die Zeitdauer der Gaspedalbetätigung einen vorgegebenen zweiten Zeitdauergrenzwert überschreitet. Wird hingegen das Gaspedal nur angetippt, also nur kurz betätigt, wird als Sollgeschwindigkeit die vor der Deaktivierung der Geschwindigkeitsregelung vorgegebene Sollgeschwindigkeit vorgegeben. Somit kann auf einfache Weise auf die Bedürfnisse des Fahrers eingegangen werden.

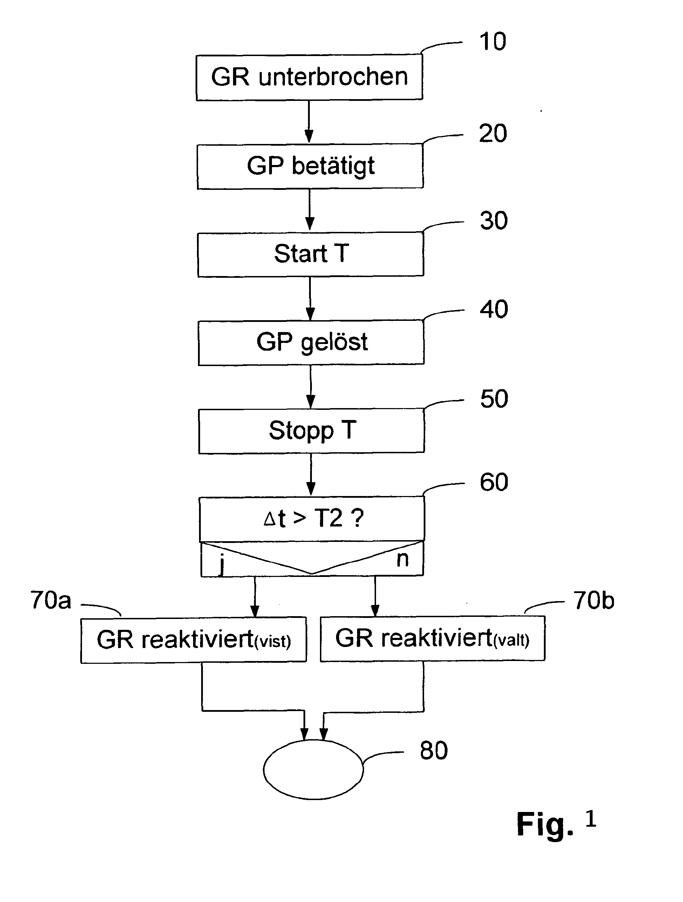

Die Erfindung wird nun anhand des nachfolgenden Ausführungsbeispiels nochmals näher erläutert. Dabei zeigt die einzige Figur ein vereinfachtes Ablaufdiagramm des erfindungsgemäßen Verfahrens.

Die Figur zeigt ein vereinfachtes Ablaufdiagramm zur Reaktivierung einer unterbrochenen Geschwindigkeitsregelung, welches Teil einer in einem Steuergerät integrierten Routine zur Geschwindigkeitsregelung sein kann.

Das erfindungsgemäße Verfahren startet im Schritt 10, sobald die Geschwindigkeitsregelung GR unterbrochen ist. Im Schritt 20 wird überprüft, ob das Gaspedal GP bei unterbrochener Geschwindigkeitsregelung GR betätigt wird. Hierzu kann bspw. ausgewertet werden, ob ein mit dem Gaspedal GP verbundener Schalter durch eine entsprechende Betätigung des Gaspedals GP geschaltet ist. Sobald eine Gaspedalbetätigung "GP betätigt" erkannt wird, wird im Schritt 30 ein Timer T gestartet und zu Schritt 40 gegangen. Dort wird überprüft, wann das Gaspedal GP wieder gelöst wird. Sobald ein Lösen des Gaspedals GP erkannt wird, wird zum Schritt 50 übergegangen und der Timer T gestoppt.

Im nächsten Schritt 60 wird das ermittelte Zeitintervall Δt, also die Zeitdauer der Betätigung des Gaspedals GP zum Reaktivieren der Geschwindigkeitsregelung GR ausgewertet. Wird das Gaspedal GP nur kurz angetippt, d. h. die Zeitdauer der Gaspedalbetätigung GP ist nicht größer als der vorgegebener Zeitdauergrenzwert T2, wird im Schritt 70b die Geschwindigkeitsregelung GR reaktiviert und als Sollgeschwindigkeit die vor der Deaktivierung zuletzt vorgegebene Sollgeschwindigkeit valt vorgegeben.

Wurde das Gaspedal GP jedoch länger betätigt, so dass das ermittelte Zeitintervall Δt den vorgegebenen Zeitdauergrenzwert T2 überschreitet, wird im Schritt 70a die Geschwindigkeitsregelung GR reaktiviert und als Sollgeschwindigkeit die beim Lösen des Gaspedals aktuelle Geschwindigkeit vist vorgegeben. Das Ablaufdiagramm endet nach der Reaktivierung der Geschwindigkeitsregelung GR im Schritt 80.

Insgesamt bietet die Erfindung den Vorteil, dass dadurch eine für den Fahrer besonders einfache und intuitive Reaktivierung einer unterbrochenen Geschwindigkeitsregelung möglich ist. Der Fahrer muss nicht erst den für die Reaktivierung vorgesehenen Betätigungsknopf, -hebel oder Schalter am Lenkrad suchen.

## Patentansprüche

1. Verfahren zum Reaktivieren einer unterbrochenen Geschwindigkeitsregelung eines sich nicht im Stillstand befindlichen Fahrzeugs zur Regelung der Geschwindigkeit auf eine vorgegebene Sollgeschwindigkeit durch Betätigung eines dafür vorgesehenen Bedienelements, **dadurch gekennzeichnet, dass** die unterbrochene Geschwindigkeitsregelung (GR) durch Betätigung des Gaspedals (GP) dann reaktiviert wird, sobald ein Lösen des Gaspedals (GP) erkannt wird, wobei nach Reaktivierung der Geschwindigkeitsregelung (GR) mittels Gaspedalbetätigung (GP) die Sollgeschwindigkeit in Abhängigkeit von der Art der Betätigung des Gaspedals (GP) derart vorgegeben wird, dass nach Reaktivierung der Geschwindigkeitsregelung (GR) als Sollgeschwindigkeit die beim Lösen des Gaspedals (GP) aktuelle Geschwindigkeit (vist) vorgegeben wird, wenn die Zeitdauer (Δt) der Gaspedalbetätigung (GP) einen vorgegebenen zweiten Zeitdauergrenzwert (T2) überschreitet und dass nach Reaktivierung der Geschwindigkeitsregelung (GR) als Sollgeschwindigkeit die vor dem Deaktivieren der Geschwindigkeitsregelung (GR) vorgegebene Sollgeschwindigkeit (valt) vorgegeben wird, wenn die Zeitdauer (Δt) der Gaspedalbetätigung (GP) einen vorgegebenen zweiten Zeitdauergrenzwert (T2) nicht überschreitet.

2. Verfahren nach Anspruch 1, **dadurch gekennzeichnet, dass** die Geschwindigkeitsregelung (GR) reaktiviert wird, wenn bei Betätigung des Gaspedals (GP) der Gaspedalweg einen vorgegebenen Gaspedalweggrenzwert und/oder die von der Bewegungsrichtung abhängige Pedalgeschwindigkeit einen vorgegebenen, von der Bewegungsrichtung abhängigen Geschwindigkeitsgrenzwert überschreitet.

3. Verfahren nach Anspruch 1 oder 2, **dadurch gekennzeichnet, dass** die Geschwindigkeitsregelung (GR) reaktiviert wird, wenn die bei Betätigung des Gaspedals aufgebrachte Kraft auf das Gaspedal (GP) einen vorgegebenen Gaspedalkraftgrenzwert überschreitet und/oder der bei Betätigung des Gaspedals (GP) aufgebrachte Druck auf das Gaspedal (GP) einen vorgegebenen Gaspedaldruckgrenzwert überschreitet.

4. Verfahren nach einem der vorangegangenen Ansprüche, **dadurch gekennzeichnet, dass** die Geschwindigkeitsregelung (GR) reaktiviert wird, wenn die Zeitdauer der Gaspedalbetätigung einen vorgegebenen Zeitdauergrenzwert überschreitet.

## Claims

1. A method for reactivating an interrupted cruise control of a vehicle which is not stationary to control the speed to a preset desired speed by actuating an operating element provided for this, **characterised in that** the interrupted cruise control (GR) is then reactivated by actuating the accelerator pedal (GP) as soon as a release of the accelerator pedal (GP) is detected, wherein, after reactivation of the cruise control (GR) by means of accelerator pedal actuation (GP), the desired speed is preset, depending on the type of actuation of the accelerator pedal (GP), in such a way that after reactivation of the cruise control (GR), the current speed (vactual) on release of the accelerator pedal (GP) is preset as the desired speed when the time period (Δt) of the accelerator pedal actuation (GP) exceeds a preset second time period limit value (T2) and **in that** after reactivation of the cruise control (GR), the desired speed (vold) preset before the deactivation of the cruise control (GR) is preset as the desired speed when the time period (Δt) of the accelerator pedal actuation (GP) does not exceed a preset second time period limit value (T2).

2. A method according to claim 1, **characterised in that** the cruise control (GR) is reactivated when, on actuation of the accelerator pedal (GP), the accelerator pedal path exceeds a preset accelerator pedal path limit value and/or the pedal speed that depends on the movement direction exceeds a preset speed limit value that depends depends on the movement direction exceeds a preset speed limit value that depends on the movement direction.

3. A method according to claim 1 or 2, **characterised in that** the cruise control (GR) is reactivated when the force on the accelerator pedal (GP), which is applied on actuation of the accelerator pedal, exceeds a preset accelerator pedal force limit value and/or the pressure on the accelerator pedal (GP), which is applied on actuation of the accelerator pedal (GP), exceeds a preset accelerator pedal pressure limit value.

4. A method according to any one of the preceding claims, **characterised in that** the cruise control (GR) is reactivated when the time period of the accelerator pedal actuation exceeds a preset time period limit value.

## Revendications

1. Procédé pour réactiver une régulation de vitesse interrompue d'un véhicule qui n'est pas à l'arrêt, pour réguler la vitesse sur une vitesse de consigne prédéfinie par l'actionnement d'un élément de manoeuvre prévu à cet effet,
procédé **caractérisé en ce que**
- on réactive la régulation de vitesse interrompue (GR) en actionnant la pédale d'accélérateur (GP) dès que la libération de la pédale d'accélérateur (GP) est détectée, et après réactivation de la régulation de vitesse (GR) par l'actionnement de la pédale d'accélérateur (GP), la vitesse de consigne est prédéfinie en fonction de la nature de l'actionnement de la pédale d'accélérateur (GP),
- après la réactivation de la régulation de vitesse (GR), la vitesse de consigne prédéfinie est la vitesse actuelle (vist) au moment de la libération de la pédale d'accélérateur (GP) si la durée (Δt) de l'actionnement de la pédale d'accélérateur (GP dépasse une seconde valeur limite de durée (T2), prédéfinie, et
- après réactivation de la régulation de vitesse (GR), la vitesse de consigne prédéfinie est la vitesse de consigne (valt) prédéfinie avant la neutralisation de la régulation de vitesse (GR), si la durée (Δt) d'actionnement de la pédale d'accélérateur (GP) ne dépasse pas une seconde valeur limite de durée (T2) prédéfinie.

2. Procédé selon la revendication 1,
**caractérisé en ce que**
la régulation de vitesse (GR) est réactivée si l'actionnement de la pédale d'accélérateur (GP) dépasse une valeur limite prédéfinie de la course de la pédale d'accélérateur et/ou si la vitesse de mouvement de la pédale dépendant du sens de mouvement, dépasse une valeur limite de vitesse prédéfinie, dépendant du sens de mouvement.

3. Procédé selon la revendication 1 ou 2,
**caractérisé en ce que**
la régulation de vitesse (GR) est réactivée si la force appliquée sur la pédale d'accélérateur (GP) lors de son actionnement, dépasse une valeur limite prédéfinie de force de pédale d'accélérateur et/ou la pression exercée sur la pédale d'accélérateur (GP) par l'actionnement de la pédale d'accélérateur (GP) dépasse une valeur limite prédéfinie de la pédale d'accélérateur.

4. Procédé selon l'une des revendications précédentes,
**caractérisé en ce que**
la régulation de vitesse (GR) est réactivée si la durée d'actionnement de la pédale d'accélérateur dépasse une valeur limite de durée, prédéfinie.
